Europäisches Patentamt

European Patent Office

Office européen des brevets

(11) Publication number: **0 684 150 A1**

# EUROPEAN PATENT APPLICATION

(21) Application number: 95201379.5

(22) Date of filing: 24.05.95

(51) Int. Cl.⁶: **B60G 17/015**, B61F 5/24

(30) Priority: 24.05.94 NL 9400843

(43) Date of publication of application:
29.11.95 Bulletin 95/48

(84) Designated Contracting States:
AT BE CH DE DK ES FR GB GR IE IT LI LU MC NL PT SE

(71) Applicant: **NEDERLANDSE ORGANISATIE VOOR TOEGEPAST-NATUURWETENSCHAPPELIJK ONDERZOEK TNO**
**Schoemakerstraat 97**
**NL-2628 VK Delft (NL)**

(72) Inventor: **Kleuskens, Ralph Jacques Antoine**
**Prins Hendrikstraat 49**
**NL-2518 HJ Den Haag (NL)**
Inventor: **Bontenbal, Gerard Philipus**
**Django Reinhardtrode 13**
**NL-2717 GL Zoetermeer (NL)**
Inventor: **Van de Meerendonk, Hans Maarten**
**Derde Werelddreef 179**
**NL-2622 HE Delft (NL)**

(74) Representative: **de Bruijn, Leendert C. et al**
**Nederlandsch Octrooibureau**
**P.O. Box 29720**
**NL-2502 LS Den Haag (NL)**

(54) System for determining the stability of a vehicle.

(57) System for determining the transverse stability of a vehicle, such as a road or rail vehicle, which system is provided with sensor means for direct or indirect determination of the forces acting on the centre of gravity of the vehicle in the vertical direction and in the transverse direction, a processor which is designed and/or programmed in such a way that said processor is able to process the output signals from the sensor means and on the basis of said signals is able to establish, with the aid of a predetermined algorithm, whether or not the stability of the vehicle in the transverse direction is at risk under the influence of the combined vectors, and output means with which the result of the algorithm applied in the processor is made available externally.

fig-1

The invention relates to the field of determination of the transverse stability of vehicles which in particular, but not exclusively, are intended for transporting loads which have a certain degree of mobility. More particularly, the invention relates to a system with which the tipping of vehicles and vehicle combinations can be prevented because measures are taken to warn the driver of the vehicle concerned in good time in situations in which the vehicle threatens to approach the tipping point. Furthermore, the invention offers the possibility for providing the drivers of vehicles with further instruction and training by subsequent analysis of a number of data recorded during the trip.

A load having a certain degree of mobility is, for example, a load of liquid, such as oil, liquid gas, milk, wine, water and other liquids. Liquid loads are generally transported with the aid of tankers which are usually constructed as tractor-trailer combinations or lorry combinations, the dynamic behaviour of which is difficult to predict for various reasons. The dynamic behaviour of a vehicle is firstly determined by various vehicle parameters, such as dimensions, type, tyres, weight, height of the centre of gravity, track width and others. In particular, power-assisted steering and pneumatic suspension lead to a certain "lack of sensitivity" on the part of the driver with regard to the reactions of the vehicle.

In addition to the actual vehicle parameters, the loading of the vehicle is an important factor which the driver must prepare himself for in advance. The behaviour of an empty vehicle is markedly different to that of a vehicle with a full load. Furthermore, the freedom of movement of the load, in particular, has an influence on the dynamic behaviour. The behaviour of a liquid load is frequently difficult for the driver to predict (experience plays a major role), which leads to further unpredictability of the vehicle.

During braking of the vehicle, the load will have the tendency to move forwards and this movement leads to the braking force having to be increased or the distribution of the braking force having to be adjusted in order to be able to maintain the same vehicle braking. When taking a bend or when driving on a road surface which is not horizontal, the load will start to move in the transverse direction and this can lead to the vehicle coming into a situation in which all of the conditions required to cause the vehicle to tip are met. It is true that the movements of the load in the longitudinal direction of the vehicle are a particular nuisance, but at least the driver has the opportunity of reacting adequately thereto. However, the movements in the transverse direction are highly unpredictable and, as already stated above, can have such an influence on the transverse stability of the vehicle that tipping of the vehicle becomes virtually unavoidable. The invention is concerned in particular with this transverse stability.

Not only liquids, but also loads consisting of material which is able to "flow" to a greater or lesser extent, such as various types of powders, cereals and other substances which are mainly transported in bulk, fall under the term "load with a certain degree of mobility" which has been used above. With loads of this type as well, the dynamic behaviour of the vehicle is, precisely as a consequence of the mobility of the load, at least partially unpredictable, in particular when it is movements of the load in the transverse direction of the vehicle which are concerned.

Incidently, the invention does not relate solely to bulk loads. Reference may be made to animal transport, such as the transport of pigs, horses, sheep, cows and the like, for other loads which have a certain degree of mobility. Certainly if the animals still have some freedom of movement, it is not inconceivable that the animals, for whatever reason, will start to move inside the loading area to one or the other side of the vehicle, as a result of which the centre of gravity of the load shifts, which, as will be apparent, has a direct influence on the dynamic behaviour of the vehicle such that, in this case as well, the driver is faced with a certain degree of unpredictability of the vehicle.

Other loads which can have a certain degree of mobility are loads of crates, packages or boxes. Loads of this type are frequently transported on pallets by vehicles which keep having to deliver part of their load at various different addresses. In this case it can arise that, as a result of the removal of part of the load, a non-uniform distribution of the load, which varies from time to time, is obtained, as a result of which the tendency of the vehicle to tip if a bend is taken too fast can increase at the side where the load is greatest. In particular, however, if the load starts to shift for any reason whatsoever, the dynamic behaviour of the vehicle becomes at least partially unpredictable and the transverse stability is placed at risk.

The problems which can arise in the case of loads which have a certain degree of mobility occur not only in road transport but also in rail transport. Rail trucks which are loaded with a liquid or wagons which are equipped for animal transport have a certain degree of unpredictability in respect of their dynamic behaviour and therefore also constitute an uncertain, unpredictable factor for the train driver.

The unpredictability in vehicle behaviour which has been mentioned briefly above has, over the years, already resulted in various vehicles tipping at unexpected moments. Such an occurrence is associated with substantial risks, especially in the case of the transport of highly flammable liquids, such as liquid gas, or the transport of hazardous substances (chemicals and/or toxic substances).

Tipping of a wagon used for animal transport can also have serious consequences, especially for the animals transported.

The aim of the invention is, now, to provide a solution to this problem. Said aim is achieved by means of a system for determining the transverse stability of a vehicle, such as a road or rail vehicle, which system is provided with sensor means for direct or indirect determination of the forces acting on the centre of gravity of the vehicle in the vertical direction and in the transverse direction, a processor which is designed and/or programmed in such a way that said processor is able to process the output signals from the sensor means and on the basis of said signals is able to establish, with the aid of a predetermined algorithm, whether or not the stability of the vehicle in the transverse direction is at risk under the influence of the combined vectors, and output means with which the result of the algorithm applied in the processor is made available externally.

With the system according to the invention, the driver now has at his disposal an objective criterion for the transverse stability of his vehicle. He no longer has to rely solely on his own impressions when assessing the situation in respect of his vehicle but is warned in an objective manner via the output means that the risk of tipping exists and then also has the opportunity to take preventive action. As a result, the risk with regard to tipping of the vehicle can be appreciably reduced.

The transverse stability and especially the tipping moment is determined by means of a calculation algorithm. On the basis of a model of the truck the dynamic behaviour thereof is determined under various driving manoeuvres. The model can be built manually but instead thereof special purpose software can be used for determining the various equations. These software tools also enable a very accurate calculation of the tipping moment for more complex truck models and for many varying circumstances (different truck configurations, loading situations, velocities, etc.). The system is able to provide a warning to the truck driver at an accurately determined correct moment. In other words, the combination of measuring signals representing the pending status of the truck, and the determination of the tipping moment of the truck may lead to an efficient use of the system. An additional advantage of using a model is, that the location of the sensor means in the truck can be taken into account and if necessary the model can be compensated for different locations. Furthermore, this system enables positioning of all hardware in the truck of the combination enhancing therewith the ease of operation.

The system described in JP-63116918 monitors a number of signals providing an indication of the vehicle state. These sensors are referred to as roll predicting and sensing sensors. If a situation is reached "outside the safe region" an alarm is generated or a rotating speed control device or brake control unit is activated to control the vehicle.

The lack of the system is the way how the safe region is determined, being the most important part in the design of a roll control mechanism. The combination of vehicle model (identifying of unsafe conditions) and hardware will determine the success of the system. Sensoring the vehicle parameters is a fairly common data logging exercise. Obtaining and filtering the right information about the vehicle status and comparing this to the outcome of the model simulation provides only good results when both methods are optimized. The English Abstract of JP-63116918 does not refer to this combination and only focuses on hardware. In addition, successful warning is only possible when the right moment of warning is known (that is not too early, since this will disturb the driver and not too late since the driver will have no time for action). This becomes even more valid when the system takes over actions from the driver, like braking. It can be very dangerous to apply brakes in certain situations (as in a curve, etc.).

Choosing the right model in combination with the system is therefore the only possible solution designing a high quality system. This is done in the system according to the present patent application where emphasis is put on both the system hardware and model.

The same argumentation holds for JP-04191179. Here also the hardware of the system is described loose from the model. In addition, this system uses no acceleration sensor, but load sensors to measure load, load shifting and body roll. This configuration asks for an independent air suspension system (left and right) to measure this quantity. In many air suspension systems, however, there is no difference in the pressure left and right since it connected, providing therefore no information about roll, only load. In this situation the system lay-out should be altered. To avoid this the system of the present patent application provides the opportunity to measure load with one or two load sensors, but has an acceleration sensor to determine body roll and load shift.

In addition, the configuration of the system according to the present patent application also offers the opportunity to filter separately the signal coming from the pressure sensors and from the acceleration sensor. The system according to JP-04191179 has to determine the filtering for load sensors, extracting load and body load, something which is harder to optimize.

The system described in WO-8905248 measures a number of vehicle parameters on tractor as well as trailer. The system according to the present patent application has only to be mounted on the tractor, something which makes installation of the system easier, especially when the vehicle configuration (tractor-trailer) changes often. The only thing that has to be changed then is the memory with the roll-over limit at different loading conditions, vehicle velocities, etc.

Again in this system, load sensors are used instead of an acceleration sensor. The disadvantages have been described before. Determination of the roll-over limit takes place with either experiments or a programme, containing the algorithm that is able to learn. More of the limit determination is not described. Again is stated here, that the combination between hardware and an accurate model is the only way to generate reliable warnings for the driver or inputs for active systems. An accurate vehicle model provides also the opportunity to correct for different positions of acceleration sensor and pressure sensors. To transfer the movement from centre of gravity to measurement point, the model can represent the exact limit values for the place where these measurements are carried out. Something the system of the present patent application can do with the accurate models.

In US-5,032,821 an extensive system has been described that merely grounds the warning of the driver on differences in rotational velocity of front wheels of the tractor and for load differences in rear axle load left and right. The system generates an alarm when thresholds are crossed.

The thresholds are determined with a model, for the front wheel synchronisation, as well for the load shift. The model(s) are not specified, passing again the importance of the combination of models (threshold determination method), configuration, placement and accuracy of sensors. The use of the front wheel synchronisation as a threshold forces the use of a full vehicle model. To describe slip quantities and following rotational velocities simple linear tire models are not accurate enough. Tires in vehicle stability critical regions are essential unlinear. This represents only one example of the difficulty of having a system using rotational stability as a way to determine vehicle stability.

In the description of the patent is never mentioned that total vehicle weight and therefore height of the centre of gravity of the vehicle is important to measure as one of the parameters determining stability of a vehicle. The patent only considers load distribution between left and right rear wheel sensors, using this as an input to determine lateral stability.

Furthermore, the sensors are spread over tractor as well as trailer, making the implementation of the system more difficult then necessary. With the use of one lateral acceleration sensor and one (or two) load sensors, and a velocity sensor (not even really needed), the system is provided with all the information about vehicle status and this can be built in the tractor. The placement of the sensors can be varied in the model, considering the effects of placement on the measured signal and calculating therewith the correct thresholds for that configuration.

Lorries can be equipped with pneumatic suspension, spiral springs or leaf springs. In the case of pneumatic suspension, a differentiation can also be made between systems which have an equal pressure on the left and on the right and systems with which the bellows on the left and the right are independent. A number of preferred embodiments intended for various types of suspension will be discussed below.

A preferred embodiment of the system, intended in particular for vehicles which have independent suspension on the left and on the right, is constructed in such a way that the sensor means are provided with at least one pressure sensor for measuring the pressure on a left-hand wheel or left-hand wheels of the vehicle and at least one pressure sensor for measuring the pressure on a right-hand wheel or right-hand wheels of the vehicle. As long as the pressure on the left-hand wheel (or left-hand wheels) and the right-hand wheel (or right-hand wheels) is at least approximately equal, there is no problem with stability. However, as soon as the pressure on one side increases and thus decreases on the other side there is question of a shift in the total weight of the vehicle towards one side and the resultant sum vector of forces, which acts on the centre of gravity of the vehicle, therefore turns in the direction of the tipping point at the relevant side of the vehicle. Should this variation in pressure persist to such an extent that the pressure on one side becomes zero and the pressure on the other side therefore becomes maximum, the condition reached is then precisely the labile situation. It is therefore possible, on the basis of the readings recorded by at least two pressure sensors, to determine whether the vehicle has reached a labile situation. However, it is better to determine the gradient from the change in pressure on both sides because this gradient is related to the acceleration which is acting on the vehicle in the transverse direction. A rapidly increasing pressure on one side (associated with a rapidly decreasing pressure on the other side) indicates a relatively high transverse acceleration. In such a situation, the driver must receive prior warning well before the labile situation is reached, as will be discussed in more detail below.

Preferably, the system is constructed in such a way that pressure sensors are arranged on both sides of the vehicle, which pressure sensors measure the pressure on the front and rear wheel on the relevant side of the vehicle. An embodiment of this type takes account of a possible non-uniform distribution of the load over the front and rear of the vehicle. An embodiment of this type can be used, for example, with a tractor-trailer, but also with a trailer combination.

In another embodiment of the system, intended in particular, but certainly not exclusively, for vehicles which do not have independent suspensions on the left and the right, the system is provided with a separate transverse acceleration sensor. On the basis of the signals from said transverse acceleration sensor, in combination with the signals from at least one pressure sensor, the processor is able, using a relatively simple algorithm, to calculate the direction of the resultant sum vector which is acting on the centre of gravity of the vehicle and, on the basis of this, to establish whether the tipping point is possibly being approached. Moreover, it is also possible, on the basis of the transverse acceleration, to establish whether, if a hazardous situation is maintained, the vehicle will start to tip if no action is undertaken by the driver.

Preferably, the system is constructed in such a way that the system is provided with a table in which the maximum permissible transverse acceleration for various load distributions is indicated and that, when the algorithm is applied in the processor, the transverse acceleration measured via the sensor is compared with the maximum permissible transverse acceleration given in the table. In a system of this type, the algorithm is simplified to a number of comparisons which indicate rapidly and directly whether the tipping situation is being approached.

In order to enable a trip which has been made to be analyzed afterwards, it is preferable to record a number of data during the trip.

The system can furthermore be constructed in such a way that a speed signal originating from the tachograph of the vehicle is transmitted to the processor. In this case, the system according to the invention can also function as a recording system. On the basis of the data collected in said recording system, a trip can be analyzed with the aid of a computer. It is thus possible, for example, to investigate at what speeds, or in what part of the route travelled, relatively high transverse accelerations occurred.

A system provided with a memory for the storage of trip data is therefore preferred.

In order to protect the system as well as possible against external influences and to achieve as compact a construction as possible, it is preferable to accommodate all components of the system, with the exception of the sensor means, which of necessity have to be mounted in different places on the vehicle, in a housing which can be positioned/mounted in the cabin of the vehicle.

The invention will be explained in more detail below with reference to the figures.

Figure 1 shows the general layout of the system according to the invention.

Figures 2A and 2B show various situations during operation of a vehicle.

Figure 3 shows a flowchart according to which one embodiment of the system functions.

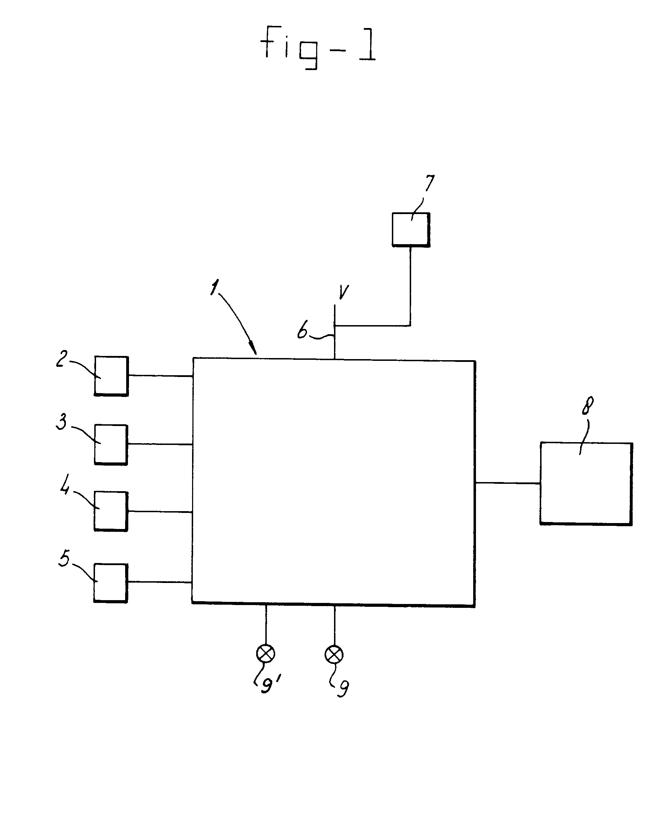

The embodiment of the system shown in Figure 1 comprises a processor 1, to which signals originating from the transverse acceleration sensor 2 are fed. Said sensor is directly or indirectly connected to the vehicle and measures the transverse acceleration of the vehicle. Transverse acceleration sensors of this type, which produce an electrical signal, one parameter of which, for example the amplitude or the frequency, varies depending on the acceleration measured, are known per se and therefore do not need to be explained in detail.

Signals originating from the loading sensor means made up of the left-hand and right-hand pressure sensors 3 and 4, respectively, which, for example, are arranged in or on the left-hand and the right-hand air bellows of the suspension system of a lorry, are also supplied to the processor 1. It is pointed out that, in principle, a single pressure sensor suffices in combination with the transverse acceleration sensor 2, which has already been mentioned. However, a general picture is outlined in Figure 1. The two pressure sensors 3 and 4 produce an electrical signal, one parameter of which varies depending on the pressure measured, which pressure, in turn, depends on the total load on the vehicle and the distribution of said load over the vehicle. Pressure sensors of this type are as such assumed to be known to those skilled in the art.

As an option, the system can be provided with a speed sensor 5, with which the current speed of the vehicle is measured. The distance travelled can be calculated by integration of the speed signal. If the vehicle is provided with a tachograph which normally produces a distance signal, said tachograph can be used as speed sensor 5. The signal produced by the speed sensor 5, or the tachograph 5, is likewise supplied to the processor 1. However, as has been stated, said speed sensor 5 is an option which is not necessary for the correct functioning of the installation.

The processor 1 and, where appropriate, the sensors 2, 3, 4, 5, are powered via line 6, which is connected to the vehicle power supply and which also can be provided with a back-up system 7 in the form of a battery unit. Said back-up system 7 comes into operation when the vehicle power supply is switched off, which must always be done when, for example, liquid gas is loaded into or unloaded from the vehicle. The back-up system 7 prevents information which is needed for possible subsequent analysis from being lost if the vehicle power supply is switched off. However, if use is made of non-volatile memory means for storing the requisite data, which in every case must be retained if the power supply is lost, the back-up system 7 can then optionally be dispensed with.

During operation, the various sensors are periodically scanned by the processor 1 and the signals obtained are processed with the aid of a predetermined algorithm. The way in which this is carried out will be discussed in more detail below. If the algorithm produces a result which indicates that the vehicle is running the risk of tipping, the processor 1 then emits a signal to the output device 9, which, in turn, can produce a signal which, for example, can be detected aurally or visually.

The processor 1 can furthermore be constructed in such a way that, following an internal check, said processor sends a signal to a further output device 9' if one of the components of the processor or the sensors is defective.

If use is made of a processor 1 which operates purely digitally, it will in many cases then be necessary to incorporate a modifier circuit between the various sensors 2, 3, 4, 5, by means of which circuit the signal from the relevant sensor is converted and modified in such a way that a digital signal is supplied to the relevant input of the processor 1, which digital signal has characteristics such that said signal can be processed by the processor 1. If, for example, the sensor produces an analogue signal which can vary within a specified analogue voltage range, it will frequently be necessary first to amplify or to attenuate said voltage range and possibly to carry out a level adjustment and will then be necessary to digitise the analogue signal before it can be supplied to the input of the processor 1.

Modifier circuits of this type, which, incidently, it is assumed are known per se to those skilled in the art and therefore will not be discussed in more detail, can at least partially be avoided if use is made of a processor with which not only digital input signals but also analogue input signals can be processed. Processors of this type are known per se and therefore do not need to be explained in more detail.

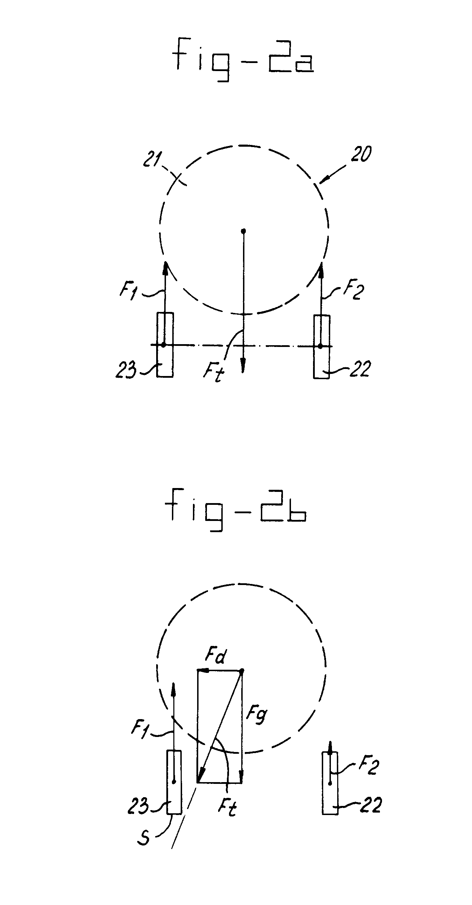

Figure 2a shows, highly diagrammatically, a tanker 20 provided with a tank 21 and at least one right-hand wheel 22 and one left-hand wheel 23. In the stable situation, the resultant vector Ft of all forces acting on the centre of gravity of the tanker will be essentially vertical, as shown in Figure 2a. The sensors, which measure the pressure absorbed by the wheels 22 and 23 will measure the forces F1 and F2 which are directed vertically upwards and which are approximately equal to one another.

If a transverse acceleration, which is indicated diagrammatically by Fd in Figure 2b, acts on the centre of gravity of the vehicle, the resultant vector Ft will arise as a combination of said transverse acceleration Fd and the total weight Fg which, in turn, arises by the combination of F1 and F2. The resultant vector Ft will be at an angle and come close to the contact point s of the left-hand rear wheel 23 with the ground. At the same time, the pressure F1 measured by the relevant pressure sensor will increase and the pressure F2 measured by the other pressure sensor will decrease. If the transverse acceleration Fd becomes so high that the vector Ft passes through the point s, a situation is then also reached where F2 is reduced to zero whilst F1 has a maximum value. At that point in time, the vehicle has reached a labile situation and will start to tip.

The rate at which the vectors F1 and F2 change is closely related to the level of the transverse acceleration Fd. Therefore, in the processor 1 it is possible, on the basis of the rate at which the values F1 and F2 change, to establish the magnitude of the speed vector Fd and also to establish whether this speed vector is so large that, if no corrections are made by the driver, the vehicle will indeed start to tip. The algorithm which has to be applied in the processor can, however, be greatly simplified if the system is provided with a separate transverse acceleration sensor such as the transverse acceleration sensor 2 illustrated in Figure 1.

The processor 1 is also connected to a memory 8, in which the maximum permissible transverse acceleration, that is to say the transverse acceleration which leads to the vehicle coming into a labile situation, is stored for various loading states, that is to say for various combinations of the different values of F1 and F2. By using a memory of this type, the algorithm which has to be applied in the processor 1 can be even further simplified because it is necessary only to establish which combination of F1 and F2 exists at the given point in time, following which the associated maximum permissible value for the transverse acceleration can be derived from the memory 8 and compared with the signal originating from the transverse acceleration sensor 2. If the transverse acceleration at a given point in time is lower than the maximum permissible value, there is, in principle, no risk of tipping. If the two values come close to one another, the risk of tipping becomes high: depending on the degree to which the two values approach one another, the driver will have to be warned by a signal which is given at the output device 9.

Preferably, the table in the memory 8 is constructed in such a way that it indicates not only the maximum permissible transverse acceleration for every combination of F1 and F2 but also a number of further transverse acceleration values corresponding to the varying safety margins. The processor can now compare the transverse acceleration measured at a given point in time with various values and establish within which safety margin the vehicle is operating at the particular point in time when the measurement is taken. Depending on the safety margin found, the driver can be given a signal via the output device, which signal, for example, changes from green via orange to red depending on the degree to which there is a risk of tipping.

It will be clear that the memory 8 can be an integral part of the processor 1. Many processors which are suitable for this purpose are provided with a sufficiently large internal memory to enable the requisite reference values to be stored therein. On the other hand, the use of an external memory 8 can have the advantage that the entire system can be adapted easily to a specific vehicle by simply changing the memory.

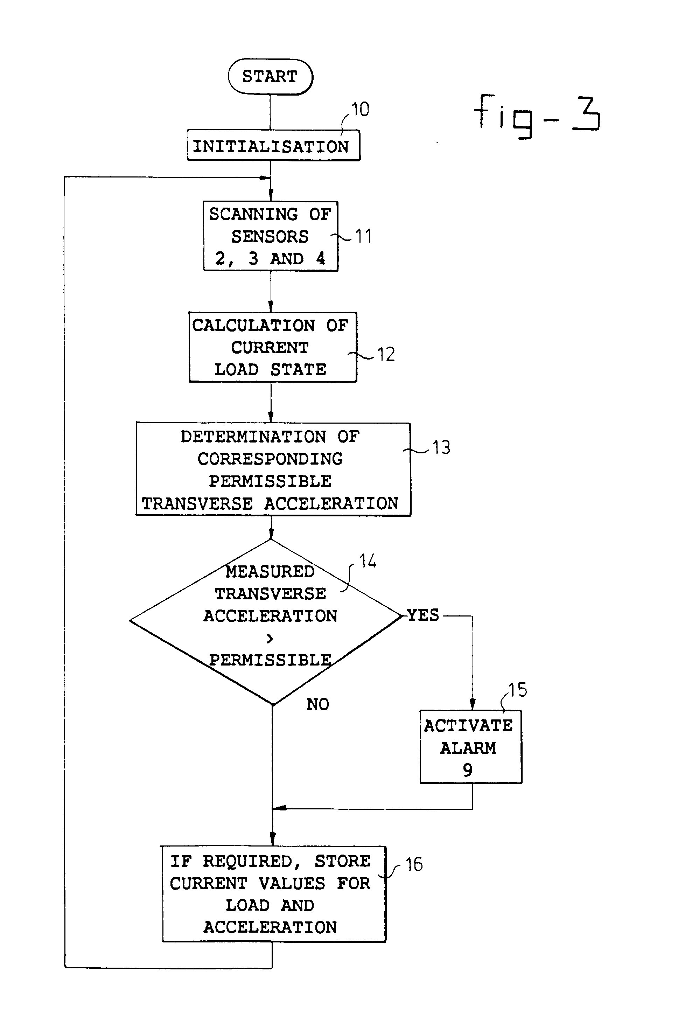

The flowchart shown in Figure 3 indicates how the said algorithm functions and what operations take place in the processor 1. In Figure 3, the processor and the various sensors are first initialised in block 10 after switching on, so that the entire system is in the normal operating condition. During the initialisation procedure, the various sensors in the system are first checked and calibrated if necessary and, in addition, a complete check is carried out on the entire system to ensure that this is functioning properly.

The various sensors 2, 3 and 4 are then scanned and sampled in block 11. The values obtained are, if necessary, subjected to a pretreatment, such as a linearisation and/or level shift and/or filtering, and are then temporarily stored in the processor 1.

In block 12 the loading state at a particular moment in time is calculated from the values obtained from the two pressure sensors. In the simplest case, this is effected by simply adding the two measured values together, by which means a value for the total load of the vehicle is obtained. If the vehicle is perfectly horizontal and the centre of gravity of the load is in the same vertical plane as the centre of gravity of the vehicle, the values obtained from the left-hand and the right-hand pressure sensor will be equal to one another. In general, however, this will not be the case because the vehicle, viewed in the transverse direction, is at a greater or lesser angle and also because the centre of gravity of the load is not always vertically in the same plane as the centre of gravity of the vehicle. If the vehicle concerned is a tanker transporting liquids or bulk material which is able to shift, then, if the vehicle is at an angle, the load will also move to a greater or lesser extent towards one side of the vehicle, as a result of which that side will be subjected to a much heavier load than the other side. If the vehicle concerned is a vehicle for transporting solid goods, non-uniform loading of the left- and the right-hand side of the vehicle can then arise as a result, for example, of the unloading of some of the goods. In the case of animal transport, the opposite situation can arise because when the vehicle is at an angle animals will tend to move towards the highest side of the vehicle. The signals from the two pressure sensors can be used not only to determine the total load but also to determine the load distribution over the left-hand and right-hand wheels of the vehicle, which distribution in the simplest case is to be determined as the ratio between the values from the two pressure sensors.

Depending on the unevenness of the road surface on which the vehicle is travelling, the values obtained from the various sensors will fluctuate to a greater or lesser extent about an average value. If, as a consequence of an uneven road surface, one of the sensors gives a signal at a particular instant which would indicate a very heavy load, an associated very low permissible transverse acceleration will be calculated in the processor and, if necessary, the driver will be given a warning, although this is completely unnecessary in the light of the actual situation. If this occurs too often, the effect of the entire system will gradually be reduced because the attention paid by the driver to the system will gradually wane. In order to prevent the warning signal being activated unnecessarily by a momentary strong pulse load from, for example, one of the pressure sensors, and in order further to prevent a desired activation not taking place in the event of a momentary reduction in load on one of the pressure sensors, it is preferable when calculating the current loading state to take account of a number of values determined for the loading state at previous times. In this context it is possible, for example, to make use of the following equation:

$$Bn = \frac{\sum_{1}^{n} B(m-n) + B(m)}{n + 1}$$

where:

B(m) = measured current loading state,

B(m-n) = n - the previously measured loading state,

n = number of previous measurements taken into account in the calculation.

In this way an average over a number of successive measured values is always taken, as a result of which sudden peak variations, which are caused by, for example, an uneven road surface, are averaged out.

Subsequently, in block 13, the loading state determined in this way is used as the input value used to search in the memory 8 for an associated permissible transverse acceleration. In order to determine the correct permissible transverse acceleration it can be necessary to carry out an interpolation between two values stored in the memory 8. It is also possible to elect for an algorithm which makes use of the next lowest permissible transverse acceleration which is stored in the memory 8.

In block 14 a response is given to the question of whether the measured transverse acceleration is greater than the permissible transverse acceleration.

If the question in block 14 is answered by "yes", the processor 1 then supplies an activating signal to the indicator means 9, by means of which it is made clear to the driver of the vehicle that his vehicle is in the danger zone. If the question in block 14 is answered by "no", there is no risk and the program proceeds to block 16. In block 16 the current values for the load and the acceleration are optionally stored in the memory for later evaluation, after which the program returns to the input of block 11 to scan the various sensors again and process the values obtained from said sensors, in the manner described above.

In the above, a warning is given to the driver when a limit value is exceeded. However, it is also possible to design the system in such a way that warnings are given at, for example, two or possibly more different threshold values. If the transverse acceleration exceeds a limit level, a signal is given, for example in the form of an orange lamp coming on. If the transverse acceleration exceeds a second, higher level, a stronger signal is given, for example in the form of a red lamp coming on.

Instead of signalling at two discrete levels, it is also possible to involve a much larger number of levels in the calculation and, for example, to indicate on a display, by means of a bar which moves backwards and forwards, or something similar, the extent to which the tipping stability is approaching the maximum limit value at the particular point in time.

## Claims

1. System for determining the transverse stability of a vehicle, such as a road or rail vehicle, which system is provided with sensor means for direct or indirect determination of the forces acting on the centre of gravity of the vehicle in the vertical direction and in the transverse direction, a processor which is designed and/or programmed in such a way that said processor is able to process the output signals from the sensor means and on the basis of said signals is able to establish, with the aid of a predetermined algorithm, whether or not the stability of the vehicle in the transverse direction is at risk under the influence of the combined vectors, and output means with which the result of the algorithm applied in the processor is made available externally.

2. System according to Claim 1, wherein the sensor means are provided with at least one pressure sensor for measuring the pressure on a left-hand wheel or left-hand wheels of the vehicle or at least one pressure sensor for measuring the pressure on a right-hand wheel or right-hand wheels of the vehicle.

3. System according to Claim 2, characterised in that pressure sensors are arranged on both sides of the vehicle.

4. System according to Claim 3, characterised in that the pressure sensors measure the pressure on the front and rear wheel on the relevant side of the vehicle.

5. System according to Claim 2, 3 or 4, used in a vehicle which has a pneumatic suspension installation provided with air bellows, characterised in that the pressure sensors are each connected to one of the air bellows of the pneumatic suspension installation for one axle of the vehicle.

6. System according to one of the preceding claims, characterised in that the sensor means are provided with a transverse acceleration sensor.

7. System according to one of the preceding claims, characterised in that the sensor means are provided with an inclination meter for measuring the inclination of the longitudinal central plane of the vehicle.

8. System according to one of the preceding Claims 2 to 7, characterised in that the signals originating from all pressure sensors are used in the processor for calculating the current load distribution of the vehicle, in particular the current load distribution over the two sides of the vehicle.

9. System according to Claim 8 referring back to Claim 5, characterised in that the system is provided with a table in which the maximum permissible transverse acceleration for various load distributions is indicated and in that, when the algorithm is applied in the processor, the transverse acceleration determined via the sensor is compared with the maximum permissible transverse acceleration given in the table.

10. System according to Claim 8 referring back to Claim 5, characterised in that the system is provided with a table in which the maximum permissible transverse acceleration is given for each of various load distributions and for a number of different margins with respect to the labile tipping situation and in that, when applying the algorithm in the processor, the transverse acceleration measured via the sensor is compared with the maximum permissible transverse accelerations originating from the table for the various margins.

11. System according to one of the preceding claims, characterised in that the system is provided with means for generating a signal which is proportional to the speed of the vehicle.

12. System according to Claim 9, characterised in that the said means are formed by the tachograph in the vehicle which supplies a signal from which a signal proportional to the speed of the vehicle can be derived in the processor in combination with an internal clock signal.

13. System according to one of the preceding claims, wherein the system is provided with a memory for periodic storage of trip data, in particular the transverse acceleration, the speed of the vehicle and the geographical location of the vehicle.

14. System according to one of the preceding claims, characterised in that the output means are connected to an indicator unit which provides the driver of the vehicle with a signal depending on the result calculated in the processor.

15. System according to Claim 14, wherein the output means are provided with a generator for generating an acoustic signal, a spoken message or the like and in that the indicator unit is designed to reproduce the acoustic signal or the spoken message.

16. System according to Claim 14 referring back to Claim 10, characterised in that the indicator unit is able to transmit a number of different signals depending on the degree to which the tipping situation is being approached.

17. System according to Claim 13, characterised in that the output means are designed for readout and display of the accumulated periodically stored trip data.

fig-1

fig-2a

fig-2b

fig-3

```
                    ┌─────────┐
                   (  START   )
                    └────┬────┘
                         │              ╭─10
                    ┌────┴────┐
                    │INITIALISATION│
                    └────┬────┘
    ┌────────────────────┤
    │               ┌────┴─────┐
    │               │SCANNING OF│ ╭─11
    │               │ SENSORS   │
    │               │2, 3 AND 4 │
    │               └────┬─────┘
    │               ┌────┴─────┐
    │               │CALCULATION OF│ ╭─12
    │               │  CURRENT  │
    │               │ LOAD STATE │
    │               └────┬─────┘
    │          ┌─────────┴──────────┐
    │          │ DETERMINATION OF   │ ╭─13
    │          │  CORRESPONDING     │
    │          │   PERMISSIBLE      │
    │          │TRANSVERSE ACCELERATION│
    │          └─────────┬──────────┘
```

DETERMINATION OF CORRESPONDING PERMISSIBLE TRANSVERSE ACCELERATION — 13

MEASURED TRANSVERSE ACCELERATION > PERMISSIBLE — 14

YES

NO

ACTIVATE ALARM 9 — 15

IF REQUIRED, STORE CURRENT VALUES FOR LOAD AND ACCELERATION — 16

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X,D | WO-A-89 05248 (MESSERSCHMITT-BÖLKOW-BLOHM) 15 June 1989<br>* the whole document * | 1,2,5,11 | B60G17/015<br>B61F5/24 |
| X,D | US-A-5 032 821 (E.J.DOMANICO; J.D.KNIGHT) 16 July 1991<br>* the whole document * | 1,2,8,9, 11,14,15 | |
| X,D | PATENT ABSTRACTS OF JAPAN vol. 16 no. 519 (M-1330) ,26 October 1992 & JP-A-04 191179 (HINO MOTORS) 9 July 1992, | 1-3,5, 11,14 | |
| A | * abstract * | 15 | |
| X,D | PATENT ABSTRACTS OF JAPAN vol. 12 no. 360 (M-746) ,27 September 1988 & JP-A-63 116918 (KAYABA IND) 21 May 1988, | 1 | |
| A | * abstract * | 2,6,9, 11,14 | |
| Y | PATENT ABSTRACTS OF JAPAN vol. 17 no. 497 (M-1476) ,8 September 1993 & JP-A-05 124543 (ISUZU MOTORS) 21 May 1993, | 1,6,11 | TECHNICAL FIELDS SEARCHED (Int.Cl.6)<br><br>B60G<br>B61F<br>B60T |
| A | * abstract * | 2,3,8,9 | |
| Y | PATENT ABSTRACTS OF JAPAN vol. 17 no. 288 (M-1423) ,3 June 1993 & JP-A-05 016699 (MATSUSHITA ELECTRIC IND) 26 January 1993, | 1,6,11 | |
| A | * abstract * | 9,14 | |
| A | PATENT ABSTRACTS OF JAPAN vol. 17 no. 106 (M-1375) ,4 March 1993 & JP-A-04 297314 (ISUZU MOTORS) 21 October 1992, * abstract * | 1-4,6,8, 11 | |

-/--

The present search report has been drawn up for all claims

| Place of search | Date of completion of the search | Examiner |
|---|---|---|
| THE HAGUE | 7 September 1995 | Tsitsilonis, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | PATENT ABSTRACTS OF JAPAN vol. 13 no. 305 (M-849) [3653] ,13 July 1989 & JP-A-01 095926 (NISSAN MOTOR) 14 April 1989, * abstract * | 1,6,9,10 | |
| A | PATENT ABSTRACTS OF JAPAN vol. 16 no. 467 (M-1317) ,29 September 1992 & JP-A-04 166409 (MITSUBISHI MOTORS) 12 June 1992, * abstract * | 1,2,6, 9-11 | |
| A | DE-A-38 12 809 (SAUER-SUNDSTRAND) 2 November 1989 | | |
| A | EP-A-0 330 149 (LUCAS IND.) 30 August 1989 | | |
| A | DE-A-41 31 076 (NISSAN MOTOR) 19 March 1992 | | TECHNICAL FIELDS SEARCHED (Int.Cl.6) |
| A | DE-A-40 17 223 (FUJI JUKOGYO) 6 December 1990 | | |
| P,X | EP-A-0 607 516 (CADILLAC GAGE TEXTRON INC.) 27 July 1994 * the whole document * | 1 | |

The present search report has been drawn up for all claims

| Place of search | Date of completion of the search | Examiner |
|---|---|---|
| THE HAGUE | 7 September 1995 | Tsitsilonis, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)